# EUROPEAN PATENT APPLICATION

(11) **EP 4 488 176 A1**
(43) Date of publication of application: **08.01.2025**
(21) Application number: 23184145.3
(22) Date of filing: 07.07.2023
(51) Int. Cl.: B64D 11/02

(54) **AIRCRAFT WITH A POTABLE WATER SYSTEM AND INSTALLATION METHOD**

(71) Applicant: Airbus Operations GmbH, 21129 Hamburg (DE)
(72) Inventor: Albers, Frederik, 21129 Hamburg (DE); Hegenbart, Matthias, 21129 Hamburg (DE); Boenning, Kenneth, 21129 Hamburg (DE); Zimmermann, Axel, 21129 Hamburg (DE); Peyres, Brice, 21129 Hamburg (DE); Pawellek, Sonja, 21129 Hamburg (DE); Ohlfest, Carsten, 21129 Hamburg (DE); Wenderoth, Stefan, 21129 Hamburg (DE); Schneider, Frank, 21129 Hamburg (DE)

(57) **Abstract**

Disclosed is an aircraft with a potable water system enabling the connection of monuments to preinstalled aircraft potable water interfaces by customized piping, which is routed within raceways for example directly along seat rails, and an installation method.

## Description

The present invention refers to an aircraft having a potable water system and to a method for installing a potable water system in an aircraft.

In general, an aircraft provides different locations for monuments such as galleys and lavatory modules. In standard locations, the monuments are installed as standard in each aircraft. In binary locations, the monument locations are fixed, but customers can select or deselect installation of monuments. For instance, seats can be installed in these locations, if no monuments are requested by the costumer. In a flex zone, the amount, the type and the locations of monuments can be chosen individually by the customer.

In order to supply fresh water to a consumer equipment such as a washbasin in the monuments, a potable water system is provided. The potable water system is adapted to feed potable water from a potable water tank to the consumer equipment. In order to fulfil individual consumer needs, the piping of the potable water systems is technically expensive. In addition, the piping restricts the individual positioning of the monuments.

It is an object of the present invention to provide an aircraft with an improved potable water system enabling a flexible installation of monuments in the aircraft cabin, and a simplified assembly method of a potable water system.

The object is achieved by an aircraft with the features of claim 1 and by a method with the features of claim 14. Advantageous embodiments are disclosed in the dependent claims, the description and the figures.

According to the invention, an aircraft has a potable water system which is adapted to feed potable water from a potable water tank to a consumer equipment of a monument in the aircraft cabin. The potable water system comprises at least one potable water interface and at least one potable water monument line. The at least one potable water interface is positioned in a floor panel of a cabin floor and in fluid connection with the potable water tank. The at least one potable water monument line extends between the at least one potable water interface and the consumer equipment. The at least one potable monument line is routed partially over its length inside a cavity which extends in a cabin floor or on top of a cabin floor. The respective direction of the cavity in longitudinal or transversal direction of the aircraft depends on the position of the selected potable water interface to the monument to be installed. When routing the potable water monument line in longitudinal direction of the aircraft, positioned the cavity along a seat tail is preferred. Positioning the cavity on top of a cabin floor, the potable water system can be retrofitted.

According to an inventive method for installing a potable water system in an aircraft to feed potable water from a potable water tank to a consumer equipment of a monument in the aircraft cabin, the potable water interfaces are installed at the defined locations. After that, the monuments in the aircraft cabin are installed and those potable water interfaces are selected, which are necessary for the customized potable water supply. Then the consumer equipments of the monuments are connected to the selected potable water interfaces via potable water monument lines and the selected interfaces are connected to a potable water main line. Finally, the not selected potable water interfaces are decommissioned, while hygienic requirements, e.g., avoiding dead ends in a potable water system, are met. Alternatively, the interfaces which are needed for the monument installation are connected to the potable water main line before the monuments are installed in the cabin. In addition, the decommissioning of the not selected interfaces can also be done before the installation of the monuments in the cabin.

The invention enables the combination of preinstalled potable water interfaces (provided at predefined positions in the aircraft) with customized pipings (potable water monument line). It can be used in the standard locations, the binary locations as well as in the flex zone. If no monument is installed at a certain position (location), then the potable water interface in the floor is protected by a lid and decommissioned. Each potable water interface can be used to connect one or several monuments. If there are several monuments connected to the potable water interface, the potable water monument lines can be routed in the same or in opposite directions. In other words, the potable water interface point can be located between monuments or consumer equipments. For instance, the potable water interface is connected in the middle of the flex zone. By routing the customized piping in a cavity along (parallel to) the seat rails, the customized piping is easy to install. Exemplary cavities are so-called raceways. This provides easy accessibility for the water lines installation during cabin furnishing or retrofit. Retrofit can be performed only for defined zones (e.g. flex zone) or for the entire fuselage. Exemplary potable water monuments lines are hoses or tubes and adapted to be used in a high-pressure system having a working pressure more than 5bar. The potable water interfaces are of the quick connect type / quick disconnect type, such as connecting a potable water monument line is easy.

In one embodiment, the cavity is positioned on the same plane as the floor panels. By means of this, the cavity is on the same level as the floor panel and can be covered by a carpet.

In order to facilitate the installation, the cavity can have a U-like shape with a bottom and two opposite side walls. The cavity is opened at its upper side such that the potable water monument line can be laid in easily.

In order to protect the potable water monument line housed in the cavity against damages by passenger shoes, trolley wheels etc, the cavity can be covered at its open upper side by a seat rail cover. Therefore, it is advantageous, if the cover of the seat rail extends laterally over the cavity. In this case, a separate cover for the cavity is not necessary. The cover also acts as an engagement member for holding and/or fixing the potable water monument line inside the cavity during a flight operation.

The at least one potable water interface can be positioned in a recess of the cabin floor that can be closed by a lid if the interface is not selected for monument installation. The recess is adapted to enable a fluid tight (gas and water tight). The lid is adapted to enable a flat cabin floor and prevents a contamination of the installed interface. In addition, the lid can also be provided in a fluid tight design.

In order to avoid vibrations or scrubbing of the at least one monument line inside the cavity, the monument line is fixed inside the cavity at discrete positions. This can either be done by form fit or by releasable fastening means such as clips and brackets.

Due to safety requirements, it is preferred if the cavity and at least one raceway adapted to house an electric cable are positioned on opposite sides of a central seat rail area. The central seat rail is adapted to receive seat fittings. If a water line and an electrical cable intersect due to installation requirements, for instance is the water line is changed in lateral direction, means are provided in order to meet safety requirements.

In one embodiment, the at least one potable monument line is fed through a monument floor section. By means of this, an opening in the monument wall for feeding through the potable water monument line is not necessary.

In another embodiment, the at least one potable monument line is fed through a monument wall section. By means of this, no opening has to be provided in the monument floor.

In a further embodiment, the at least one potable monument line is partially routed inside a monument wall section. By means of this, no opening has to be provided in the monument floor and the potable monument line is hidden. However, it can also be partially routed inside a monument floor section.

If a second potable water monument line is provided, this second potable water line can extend from the (first) consumer equipment to a second consumer equipment. By means of this, the potable water monument lines are looped.

Alternatively, in the at least one potable water monument line a fluid coupling means is provided, which is connected with a second potable water monument line extending to a second consumer equipment. By means of this, the total length of the second potable water line can be reduced compared to the looped design. An exemplary position for the fluid coupling means is the cavity.

Advantageously, the potable water system, at least one potable water main line and at least one potable water branch line are provided. The at least one potable water main line and the potable water branch line are adapted to feed potable water stored in the potable water tank to the at least one potable water interface. The at least one potable water main line is routed in longitudinal direction from the potable water tank and positioned in a central area of the aircraft below the cabin floor. The at least one potable water branch line extends from the at least one potable water main line to at least one potable water interface. Depending on the routing of the potable water main line and the position of an activated potable water interface, the branch lines can extend in transversal direction, in a diagonal direction or just in a vertical direction. For instance, if the main water line is positioned in the middle of the aircraft, the potable water line also extends in transversal direction. If the main potable water line is positioned laterally, it can be positioned directly below the at least one potable water interface, so that there is (basically) only a vertical extension of the potable water branch line. Due to this measure, icing of the potable water system is prevented as all lines are routed in warm regions of the aircraft. As a result, ice protection equipment for the potable water lines can be omitted by design. That will reduce the complexity and weight of the potable water system significantly.

According to a preferred method, several aircraft sections of different aircrafts are equipment with the same potable water system. The potable water systems have the same interfaces at the same positions. By means of this, aircraft sections with a standardized potable water system are produced. The costumer can then select individually and very flexible, in which location - standard location, binary location or flex zone - what type of monument should be installed. Interfaces which are then needed for the monument installation are activated, whereas not selected interfaces are decommissioned.

In what follows, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not necessarily defined again for each figure. Shown is schematically in
- Fig. 1:: a cabin layout with an exemplary inventive potable water system;
- Fig. 2:: a top view of an installed potable water interface;
- Fig. 3:: the installed potable water interface protected by a lid shown in fig. 2;
- Fig. 4:: a sectional view of a forward fuselage area shown in fig. 1;
- Fig. 5a:: a cross sectional view of a fuselage in a monument area;
- Fig. 5b:: a cross sectional view of a fuselage in monument area illustrating a different routing of a potable water main line;
- Fig. 6:: a detailed top view of a seat rail and a potable water interface;
- Fig. 7:: a detailed cross-sectional view of a potable water monument line in a cavity parallel to a seat rail and its fluid connection to a potable water main line;
- Fig. 8:: an alternative positioning of the potable water monument cavity;
- Fig. 9:: a looped routing of potable water monument lines through a monument floor opening;
- Fig. 10:: an alternative monument floor-based routing of potable water monument lines;
- Fig. 11:: a routing of the potable water monument line along a monument wall;
- Fig. 12a:: a routing of the potable water monument line inside a monument wall; and
- Fig. 12b:: and routing of the potable water monument line inside a monument wall illustrating an alternative position of a fluid coupling.

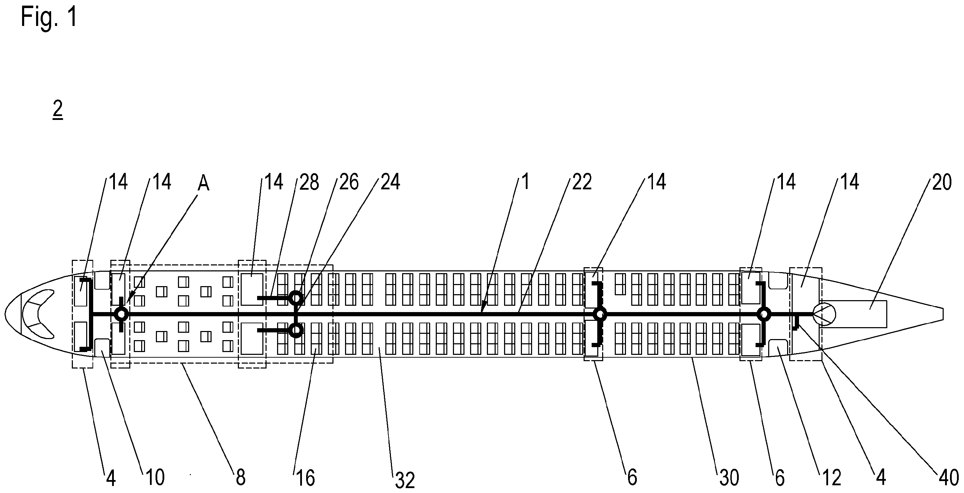

In Figure 1 a cabin layout of a single aisle passenger aircraft and an inventive potable water (distribution) system 1 are shown. Here, the cabin 2 has three different types of monument locations - the standard locations 4, the binary locations 6 and the flex zone 8. The standard locations 4 are in front of a first cabin door 10 in the forward fuselage and behind a last cabin door 12 in the aft fuselage. The location of the monuments 14 such as galleys and lavatories are fixed, the type of monuments 14 can vary depending on the costumer's needs.

In the binary locations 6, the monument locations are fixed, but a customer can select or deselect an installation. For instance, seats 16 can be installed in these locations, if no monuments are requested by the costumer.

In the flex zone 8, the amount, the type and the locations of monuments 14 can be chosen individually by the customer. The customer can choose an individual position of the monuments at least in longitudinal direction (for example in a one-inch spacing) of the aircraft. In the shown example, the flex zone 8 is in the forward area of the cabin 2 between the first door 10 and a not shown centre wing box.

In the shown embodiment, the potable water system 1 comprises a potable water tank (tank) 20 and a water distribution network (piping). Potable water is stored in the tank 20 in the aft fuselage and is distributed to the cabin monuments 14 by means of the water distribution network. However, a plurality of tanks 20 can also be provided which are positioned in different positions in the aircraft, for instance in a forward section or in a mid-section. The network comprises at least one potable water main line 22 (main line), several potable water branch lines 24 (branch lines), several potable water interfaces 26 (interfaces) and several potable water monument lines 28(monument lines).

The main line 22 extends in longitudinal direction of the aircraft. It is connected with the tank 20 and routed in sufficient distance to the aircraft skin 30 or to other cold zones so that ice protection equipment is not required. For instance, the main line 22 is positioned in a centre area of the fuselage below a cabin floor 32.

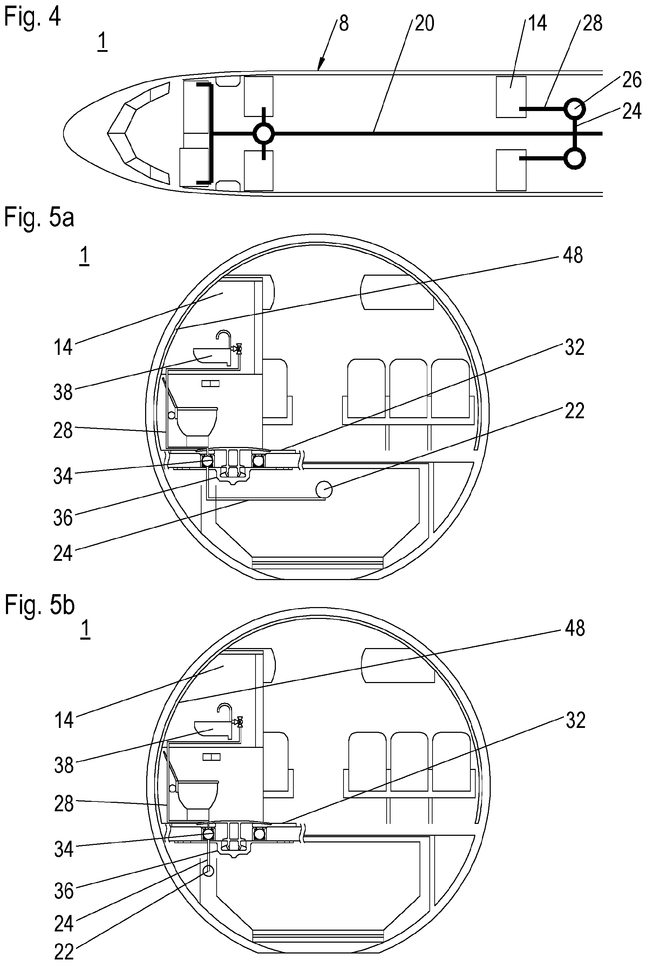

By means of the branch lines 24, the potable water is distributed to the interfaces 26. In the shown embodiment, the branch lines 24 extend in transversal direction and in vertical direction below the cabin floor 32. Each branch line 24 is in fluid connection with one potable water interface 26. However, as indicated by arrow A in Figure 1, if the interface 26 is positioned vertically above the main line 22, the branch line 24 has only a vertically component (not illustrated as hidden by the interface 26. In a more detailed view this arrangement is shown in Figure 5b.

The interfaces 26 are of a of quick disconnect type and positioned in the cabin floor 32. Each interface 26 is in fluid connection with a potable water monument line 28 via a branch line 24. The monuments lines 28 are routed in longitudinal direction at least partially over their length inside a cavity 34 along a seat rail 36. They are in fluid connection with a consumer equipment 38 of a monument 14 such as a washbasin.

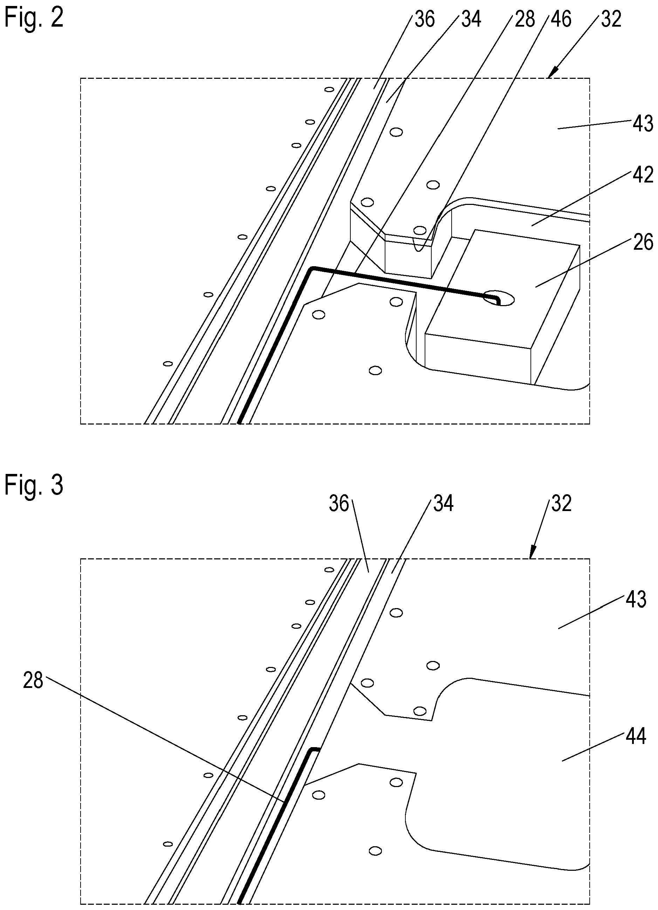

The standards and binary locations 4, 6 can be equipped with the interface 26 that is used for the flex zone 8. This makes the production process easy and enables standardized monument designs. But in this case, a routing in a cavity 34 next to seat rails 36 - as explained in the following - is not preferred. The monument 14 can then be directly positioned on top of a floor recess 42 housing the interface 26 (interface box, see Figure 2).

Preferably, the main line 22, branch lines 24 and the interfaces 26 are preassembled at fixed position in the fuselage and in the cabin floor 32, respectively, whereas the monument lines 28 are installed afterwards regarding individual costumer's needs.

Preferably, the cabin locations 4, 6 which provides standard and binary monument positions only, the monuments 14 are connected to the main line 22 by a secondary distribution line 40, already installed as standard during assembly.

In addition, the cabin locations 4, 6 which provides standard and binary monument positions only, the monuments14 are connected to the main line 22 by a secondary distribution line 40, already installed as standard during assembly.

In figure 2 and 3 a detailed view of an interface 26 is shown. The interface 26 is positioned in a recess 42 of a cabin floor panel 43 and located close to a seat rail 36. The recess 42 is opened to the cabin 1 and can be closed by a lid 44 in order to form a smooth cabin floor 32. The recess 42 is designed to be water and gas tight to the underfloor area in order to avoid smoke from underfloor accessing the cabin 2 in case of a fire and to avoid water in case of a leak accessing the underfloor area. The fluid tight design can be supported by the lid 44 additionally.

The monument line 28 is fed to the cavity along the seal rail 36 through a channel 46 which is also closed by the lid 44. The interface 26 is of quick disconnect type and installed at fixed, predefined positions. If no monument 14 is installed at a certain position, then the respective interface 26 is decommissioned while hygienic requirements, e.g., avoiding dead ends in a potable water system, are met.

If there are several monuments 14 connected to one interface 26, the monument lines 28 can be routed in the same or in opposite directions. In other words, the interface 26 can be located in the middle of the flex zone 8 so that some monuments 14 are positioned behind and some other are positioned in front of it.

In Figures 4, 5a, 5b and 6, a more detailed view of the inventive potable water system 1 is shown. Here, a lavatory 14 is provided whose washbasin 38 should be connected to the potable water system 1. In flight direction, the lavatory 14 is laterally positioned on the left side of the cabin 1.

As already said before, the main line 22 is positioned below the cabin floor 32 in a fuselage area characterised by an ambient temperature preventing icing of the potable water. According to Figures 4, 5a, and 6, the centre area of the fuselage is chosen, for instance. A branch line 24 extends in transversal and vertical direction below the cabin floor 32 between the main line 22 and an interface 26. However, as shown in Figure 5b, if the interface 26 is positioned directly over the main line 22, the branch line 24 extends only in vertical direction below the cabin floor 32 between the main line 22 and the interface 26. Such arrangement can be given, when the main line 22 is routed more laterally, for instance.

Referring to Figures 4, 5a, 5b and 6 again, the interface 26 is located close to a seat rail 36 in the cabin floor 32. A monument line 28 extends from the interface 26 to the washbasin 38. Thereby, the monument line 28 is housed in a cavity 34 parallel to the seat rail 36 and then routed to the washbasin 38.

In order to prevent icing of the potable water in each interface 26 and each monument line 28, they are also positioned/routed in warm areas of the fuselage. For instance, the monument lines 28 are not routed in a space between the outer aircraft skin 30 and an inner cabin lining 48.

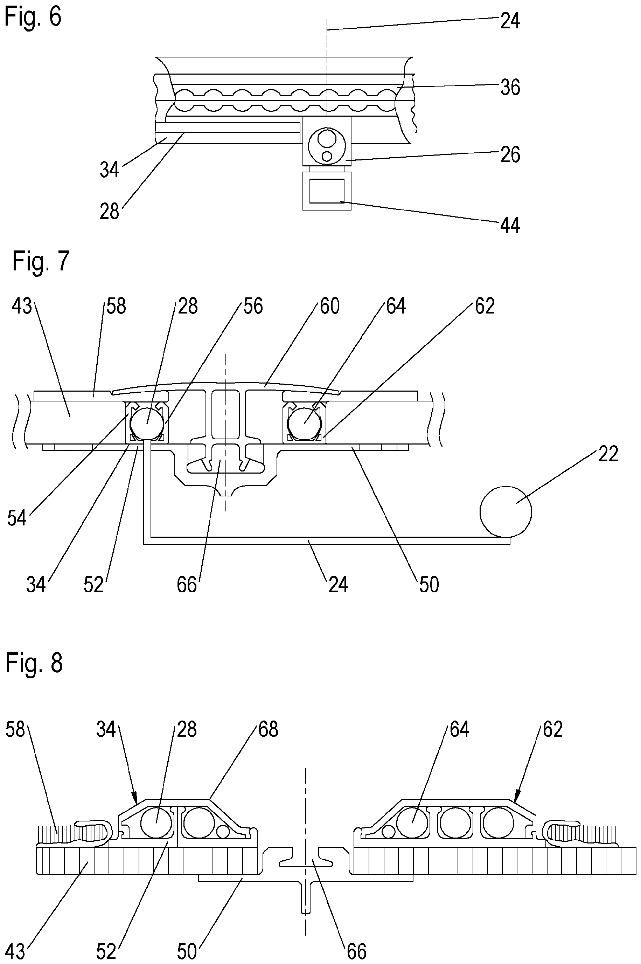

As already shown in Figures 5a and 5b and in more detail in Figure 7, in a preferred embodiment the longitudinal cavity 34 for the monument line 28 is positioned in the same plane as the floor panel 43. In vertical direction, the cavity 34 does not extend over the floor panel 43. As a result, a flat floor panel top is achieved. Preferably, the cavity 34 and the floor panel 43 are both positioned on a lateral seat rail flange 50 and have the same height.

The cavity 34 has a U-like shape with one bottom 52 and two parallel side walls 54, 56. At its top, the cavity is opened. After installation of the monument line 28, the cavity 34 is covered with the cabin floor carpet 58, and in addition protected by a seat rail cover 60 against damages from the top, caused by shoes or trolley wheels, for instance.

An exemplary cavity 34 is a so-called raceway. In order to meet safety requirements, the monument lines 28 and raceways 62, which are used conventionally for electric cable 64, are spaced apart from each other. For instance, the monument lines 28 and the electrical cables 64 are routed on opposite sides of a central area 66 of the seat rail 36 which is adapted to receive seat fittings (not shown).

Preferably, the monument lines 28 are fixed in the cavities by form fit and/or the seat rail cover 60. Additionally, the potable water lines can be attached / fixed in the cavities 34 by using clips, brackets and the like at discrete positions (e.g. spacing 20 cm) preventing vibrations or scrubbing. An expansion of the monument lines 28 in longitudinal direction is generally possible.

In Figure 8, an alternative embodiment of the cavities 34 is shown. In this embodiment, the cavities 34 are positioned not in the same plane as floor panels 43, but on the floor panels 43. This embodiment refers to retrofit. It enables retrofitting the aircraft without replacing the floor panels 43. The variant is also suitable for areas where the integrated raceway 62 is not accessible for water lines.

Due to the positioning of the cavities 34 (raceways) on the floor panels 43, they are not covered by a floor carpet 58 or a seat rail cover 60. Therefore, in order to protect the monument lines 28 (and electric cables 64) against damages, the cavities 34 / raceways 62 have their own cover 68, which is connected to a bottom 52 of the cavities 34 via form fit engagement.

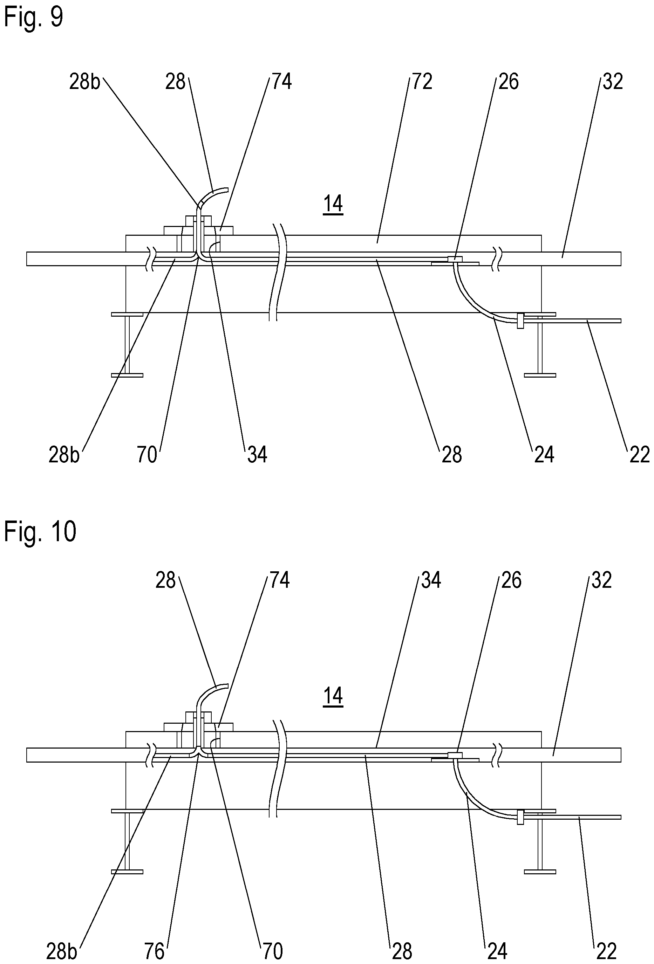

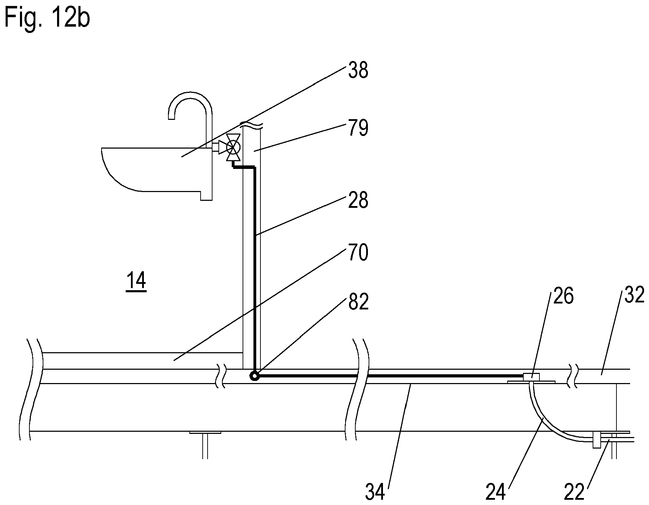

As shown in Figures 9 to 12a and 12b, the routing of the monument line 28 out of the respective cavity 34 inside the monument 14 and in particular to the consumer equipment 38, several options are applicable.

In Figures 9 and 10 the monument line 28 is fed through an opening 70 in a monument floor section 72. The main line 22 can be routed to each longitudinal (x-position) within the respective cabin location, for instance the flex zone 8. The length of the monument line 28 between the interface 26 and the monument 14 can be individually configured (for example via trim-to-fit principle or via preconfigured hose elements). A plug 74 with a funnel installed in the monument floor section 72 provides a waterproof inlet from the cavity 34 to the monument 14. A dike or wall around the floor inlet can be arranged in order to avoid stagnant water being in contact with the sealing permanently.

In order to connect multiple monuments 14, in Figure 9 loops through the monument line 28 are shown. This means, a first monument line 28 is fed to a first consumer equipment and a second monument line 28b is fed from the first consumer equipment to a second consumer equipment along the seat rails 36 inside the cavity 34. Thereby, the first monument line 28 and the second monument line 28b can be fed through one common opening in the cabin floor 32 (as shown) or, alternatively, the first monument line 28 and the second monument line 28b are fed through single floor openings.

In Figure 10 an alternative to the looped design is shown. Here, a T-junction 76 as a fluid coupling means in the first monument line 28 is provided. The T-junction is positioned inside the cavity 34. It provides a fluid connection point for a second monument line 28b running in the cavity 34 and being in fluid connection with a second consumer equipment.

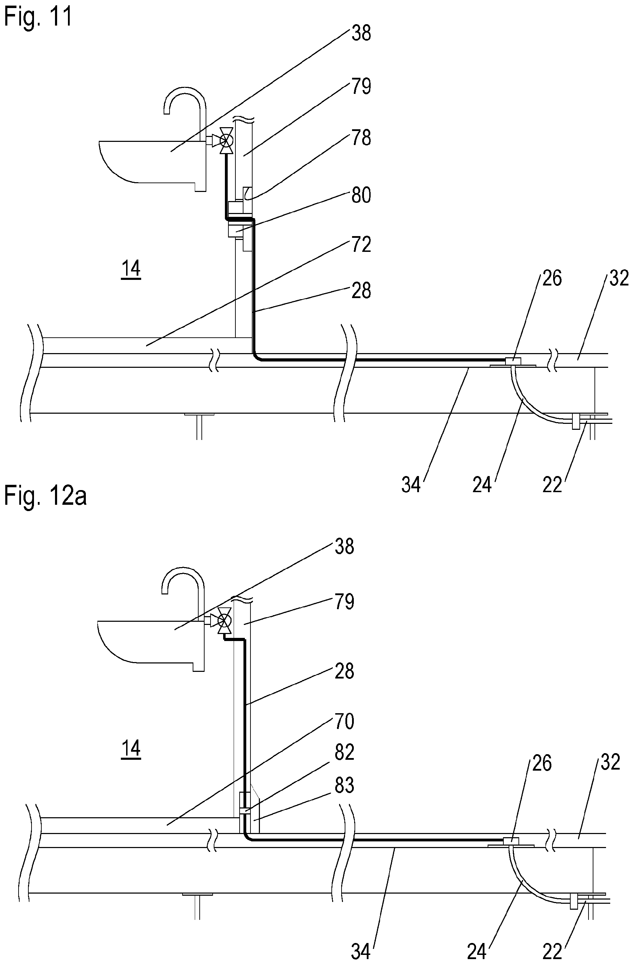

In the embodiment according to Figure 11, a monument line 28 is not inserted from below through a monument floor section 72 (as shown in Figure 9 and 10), but laterally through an opening 78 in a monument wall section 79. Here, the monument line 28 in the cavity 34 is routed from an interface 26 directly through a monument wall funnel 80 to the consumer equipment 38 in the monument 14.

Alternatively, as shown in Figure 12a, a monument line 28 in the cavity can be routed from an interface 26 via a separate connection point 82 behind a monuments kickstrip 83 to the water consumer 38 in the monument 14. As shown in Figure 12a, the connection point 82 can be positioned inside the monument wall 79. In the embodiment shown on Figure 12b, the connection point 82 is positioned inside the cabin floor 32, for instance in the cavity 34.

In the following, a method for installing a potable water system 1 in an aircraft to feed potable water from a potable water tank 20 to a consumer equipment 38 of a monument 14 in the aircraft cabin 2 is described. Again, the water potable system 1 enables the connection of the monuments 14 to preinstalled aircraft potable water interface 26 by customized piping 28, which is routed within the raceways 34, 62, for example directly along seat rails 36. All parts of the potable water distribution network such as the potable water main line 22 as well as the potable water branch lines 24, the potable water interfaces 26 and the potable water monument lines 28 are routed in warm fuselage areas.

In a first step, the main line 22 is installed. Then, the locations for the potable water interfaces 26 are installed at their defined locations in the cabin floor 32. After that, the monuments 14 are installed in the aircraft cabin 2. The needed interfaces 26 are selected and the at least one consumer equipment 38 of a monument 14 is connected to the selected interfaces 26 via the monument lines 28 and are connected via the branch lines 24 to the main line 22. Not selected interfaces 26 are decommissioned. Again, not selected, decommissioned interfaces 26 fulfil, hygienic requirements, e.g., avoiding dead ends in a potable water system.

Alternatively, the interfaces 26 which are needed for the monument installation are connected to the potable water main line 22 before the monuments 14 are installed in the cabin 2. In addition, the decommissioning of the not selected interfaces 26 can also be done before the installation of the monuments 14 in the cabin 2.

For the sake of completeness, it is stated that fastening means as well as coupling means such elbow joints, clips, brackets, sleeves and control means such valves which are needed for the installation of fluid networks comprising hoses and pipes are not illustrated. For instance, in order to avoid a large bending radius of the monument line 28, the monument line 28 can be divided up into several sections, wherein some of these sections are in fluid connecting via an elbow joint.

Disclosed is an aircraft with a potable water system enabling the connection of monuments to preinstalled aircraft potable water interfaces by customized piping, which is routed within raceways for example directly along seat rails, and an installation method.

## Claims

1. An Aircraft with a potable water system (1) adapted to feed potable water from a potable water tank (20) to a consumer equipment (38) of a monument (14) in the aircraft cabin (2), comprising
• at least one potable water interface (26); and
• at least one potable water monument line (28);
wherein the at least one potable water interface (26) is positioned in a cabin floor (32) and in fluid connection with the potable water tank (20);
wherein the at least one potable water monument line (28) extends between the at least one potable water interface (26) and the consumer equipment (38); and
wherein
the at least one potable monument line (28) is routed partially over its length inside a cavity (34) which extends in a cabin floor (32) or on top of a cabin floor (32).

2. The Aircraft according to claim 1, wherein the cavity (34) is positioned on the same plane as floor panels (43).

3. The Aircraft according to claims 1 or 2, wherein the cavity (34) has a U-like shape with a bottom (52) and two opposite side walls (54, 56).

4. The Aircraft according to claims 1, 2 or 3, wherein an installed cover (60) of a seat rail (36) extends laterally over the cavity (34).

5. The Aircraft according to any of the preceding claims, wherein the at least one potable water interface (26) is positioned in a recess (42) of the cabin floor (32) which can be closed by a lid (44).

6. The Aircraft according to any of the preceding claims, wherein the at least monument line (22) is fixed inside the cavity (34) at discrete positions.

7. The Aircraft according to any of the preceding claims, wherein the cavity (34) and at least one raceway (62) adapted to house an electric cable (64) are positioned on opposite sides of a central seat rail area (66).

8. The Aircraft according to any of the preceding claims, wherein the at least one potable monument line (28) is fed through a monument floor section (72).

9. The Aircraft according to any of claims 1 to 7, wherein the at least one potable monument line (28) is fed through a monument wall section (79).

10. The Aircraft according to any of claims 1 to 7, wherein the at least one potable monument line (28) is partially routed inside a monument wall section (79) or inside a monument floor section (72).

11. The Aircraft according to any of claims 7 to 10, wherein a second potable water monument line (28) is provided that extends from the consumer equipment (38) to a second consumer equipment.

12. The Aircraft according to any of claims 7 to 10, wherein in the potable water monument line (28) a fluid line coupling means (76) is provided, which is connected with a second potable water monument line (28b) extending to a second consumer equipment.

13. The Aircraft according to any of the preceding claims, wherein
• at least one potable water main line (22); and
• at least one potable water branch line (24) are provided;
wherein the at least one potable water main line (22) and the potable water branch line (24) are adapted to feed potable water stored in the potable water tank (20) to the at least one potable water interface (26);
wherein the at least one potable water main line (22) is routed in longitudinal direction from the potable water tank (20) and positioned in a central area of the aircraft below the cabin floor (32); and
wherein the at least one potable water branch line (24) extends from the at least one potable water main line (22) to at least one potable water interface (26).

14. A method for installing a potable water system (1) in an aircraft to feed potable water from a potable water tank (20) to a consumer equipment (38) of a monument (14) in the aircraft cabin (2), with the steps:
a. Installing the potable water interfaces (26) at their defined locations in the cabin floor (32);
b. Installing the monuments (14) in the aircraft cabin (2);
c. Connecting the consumer equipments (38) of the monuments (14) to selected potable water interfaces (26) via potable water monument lines (28);
d. Connecting the selected portable interfaces (26) to a potable water main line (22); and
e. Decommissioning the not selected potable water interfaces (26);
wherein steps d) and e) can be done before step b).

15. Method according to claim 14, wherein several aircraft sections of different aircrafts are equipment with the same potable water system (1) having the interfaces (26) at the same locations (4, 6, 8) .
